# EUROPEAN PATENT APPLICATION

(11) **EP 1 365 460 A2**
(43) Date of publication of application: **26.11.2003**
(21) Application number: 03011623.0
(22) Date of filing: 22.05.2003
(51) Int. Cl.: H01M 2/02, H01M 10/40

(54) **Nonaqueous electrolyte secondary battery**

(30) Priority: 24.05.2002 JP 2002151449
(71) Applicant: MATSUSHITA ELECTRIC INDUSTRIAL CO., LTD., Kadoma-shi, Osaka 571-8501 (JP)
(72) Inventor: Shoji, Masashi, Osaka-shi, Osaka 532-0022 (JP); Igaki, Emiko, Amagasaki-chi, Hyogo 661-0003 (JP); Tanahashi, Masakazu, Osaka-shi, Osaka 545-0035 (JP); Nakamura, Toshikazu, Suita-shi, Osaka 564-0035 (JP); Shimada, Mikinari, Yawata-shi, Kyoto 614-8117 (JP)
(74) Representative: Leson, Thomas Johannes Alois, Dipl.-Ing.

(57) **Abstract**

A nonaqueous electrolyte secondary battery including a battery case that is not corroded easily even at the time of over-discharging is provided. The nonaqueous electrolyte secondary battery includes a battery case 11 serving as a negative electrode terminal, and a positive electrode 13, a negative electrode 14, a separator 15 and a nonaqueous electrolyte that are enclosed in the battery case 11. The positive electrode 13 and the negative electrode 14 respectively include an active material that stores and releases lithium reversibly. The battery case 11 includes a case 11a formed of a metal plate having iron as a principal component and a metal layer 11b formed at least in a part of an inner surface of the case 11a, and the metal layer 11b includes a metallic element M that dissolves in the nonaqueous electrolyte at a lower potential than iron and at a higher potential than lithium.

## Description

The present invention relates to a nonaqueous electrolyte secondary battery. In particular, the present invention relates to, for example, a lithium secondary battery.

In recent years, accompanying the development of electronic equipment, there is a demand for secondary batteries that are small and light-weight, have high energy density and allow repeated charging and discharging. As such batteries, research has been conducted actively on nonaqueous electrolyte secondary batteries, in particular, lithium secondary batteries using a positive electrode containing a composite oxide such as lithium cobaltate and a negative electrode containing a carbon material.

In a nonaqueous electrolyte secondary battery, a battery case, which serves also as a negative electrode terminal, generally is formed of a nickel-plated iron plate. Such a battery case is connected electrically with a negative electrode and has an electric potential equal to the negative electrode. The potential of the negative electrode is a potential at which a carbon material intercalates/deintercalates lithium, and is at least about 1.5 V lower than a dissolution potential of lithium, though it varies depending on the physical property of the carbon material, especially how its layer structure is developed (an interlayer distance, how layers overlap in a c-axis direction, and how layers spread in an a-axis direction). Since this negative electrode potential is lower than a corrosion potential of a metal used as the material of the battery case, the battery case is not corroded in an ordinary state.

However, when this battery is over-discharged, the negative electrode potential rises to a potential at least about 3.2 V higher than the dissolution potential of lithium and reaches an equal potential to the positive electrode. Since iron dissolves at this potential, when the battery case is formed of a metal plate containing iron, the iron of the battery case is corroded. For example, when the battery case is formed of a nickel-plated iron plate, the iron is corroded in a pinhole portion or a damaged portion of the nickel plating because iron is more easily corroded than nickel. Such insufficient nickel plating is likely to be found in a constricted portion of the case. When the battery case is heavily corroded, there is a possibility that a hole is made in the battery case, through which a nonaqueous electrolyte leaks.

In order to solve the problem described above, a battery case formed of an austenitic stainless steel that has a high corrosion resistance is suggested (see JP 6(1994)-111849 A). However, such a stainless steel is expensive because of the complexity of its forming process.

With the foregoing in mind, it is an object of the present invention to provide a nonaqueous electrolyte secondary battery including a battery case that is not corroded easily even at the time of over-discharging.

In order to achieve the above-mentioned object, a nonaqueous electrolyte secondary battery of the present invention includes a battery case serving as a negative electrode terminal, and a positive electrode, a negative electrode, a separator and a nonaqueous electrolyte that are enclosed in the battery case. The positive electrode and the negative electrode respectively contain an active material that stores and releases lithium reversibly. The battery case includes a case formed of a metal plate having iron as a principal component and a metal layer formed at least in a part of an inner surface of the case. The metal layer contains a metallic element M that dissolves in the nonaqueous electrolyte at a lower potential than iron and at a higher potential than lithium. In the present specification, the "principal component" refers to a component that is contained in a content of at least 95% by weight. Further, in the present specification, the "iron plate" includes a general steel plate to which a slight amount (for example, 5% by weight or less) of an element such as carbon is added.
Fig. 1 is a partially sectional side view showing an example of a nonaqueous electrolyte secondary battery of the present invention.
Fig. 2 is a sectional view showing an example of a battery case used in the nonaqueous electrolyte secondary battery of the present invention.
Fig. 3 is a sectional view showing another example of the battery case used in the nonaqueous electrolyte secondary battery of the present invention.

A nonaqueous electrolyte secondary battery of the present invention includes a battery case serving as a negative electrode terminal, and a positive electrode, a negative electrode, a separator and a nonaqueous electrolyte that are enclosed in the battery case. The positive electrode and the negative electrode respectively contain an active material that stores and releases lithium reversibly. The battery case includes a case formed of a metal plate having iron as a principal component and a metal layer formed at least in a part of an inner surface of the case, and the metal layer contains a metallic element M that dissolves in the nonaqueous electrolyte at a lower potential than iron and at a higher potential than lithium. In this nonaqueous electrolyte secondary battery, even when a potential of the battery case rises to a potential equal to or higher than a potential at which iron dissolves at the time of over-discharging, the metallic element M dissolves preferentially so that iron can be prevented from dissolving. Consequently, in accordance with the present invention, it is possible to prevent the electrolyte leakage caused by corrosion of the battery case.

The metal layer may be a layer formed by plating.

Also, the battery case may include a nickel layer formed on the inner surface of the case, and the metal layer may be formed on the nickel layer.

Further, the battery case may be formed of a clad material obtained by attaching by pressure a plate to be the metal layer and the metal plate to each other.

The metal layer may be formed at least in a corner of a bottom part of the inner surface of the case. The corrosion of the battery case is likely to occur particularly in a bent portion of the battery case. By forming the metal layer in the corner of the bottom part of the case, it is possible to prevent corrosion in the bent portion of the bottom part.

Furthermore, the secondary battery of the present invention further may include a sealing plate for sealing the battery case. The battery case may be provided with a constriction for fixing the sealing plate, and the metal layer may be formed in the area of the constriction. Although the area of the constriction is bent and thus easily corroded, the corrosion of the area of the constriction can be prevented by forming the metal layer in this area.

Moreover, the positive electrode, the negative electrode and the separator may be wound spirally so as to form an electrode plate group, and the metal layer may be formed near an end of the electrode plate group. Since the battery case is easily corroded particularly in the vicinity of the positive electrode, it is preferable to form the metal layer near the end of the electrode plate group.

It is preferable that a quantity of electricity necessary for dissolving as a metal ion all of the metallic element M contained in the metal layer is at least 4% of a capacity of the battery. This makes it possible to prevent particularly the corrosion of the case formed of the metal plate. In the present specification, the "capacity of the battery" refers to a capacity of the battery that has been charged until the battery voltage reaches 4.2 V and then discharged until the battery voltage reaches 3.0 V.

Additionally, it is preferable that the metallic element M is zinc. This makes it possible to suppress the lowering of battery characteristics owing to the metallic element M.

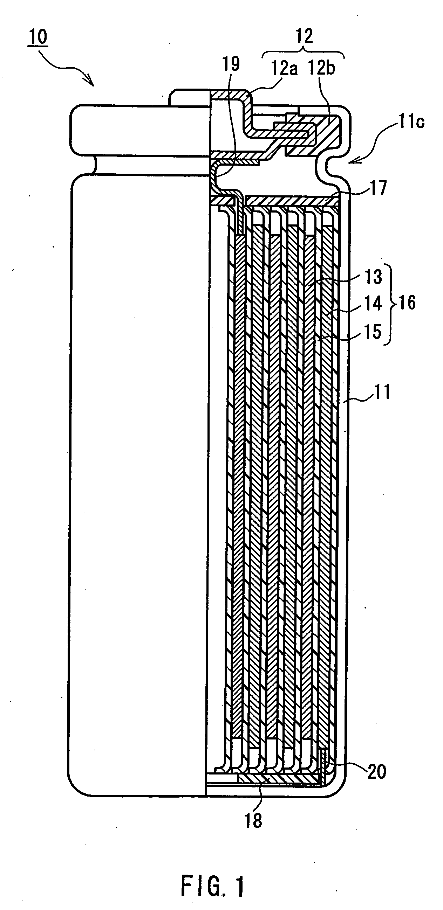

The following is a specific description of an embodiment of the present invention, with reference to the accompanying drawings. As an example of the nonaqueous electrolyte secondary battery of the present invention, a partially sectional side view of a nonaqueous electrolyte secondary battery 10 is shown in Fig. 1.

The nonaqueous electrolyte secondary battery 10 includes a battery case 11 serving as a negative electrode terminal (hatching is omitted), a seal 12 for sealing the battery case 11, and further a positive electrode 13, a negative electrode 14, a separator 15 and a nonaqueous electrolyte (not shown) that are enclosed in the battery case 11. The positive electrode 13 and the negative electrode 14 respectively contain an active material that stores and releases lithium reversibly. They are wound spirally while sandwiching the separator 15, so as to form an electrode plate group 16. Above and below the electrode plate group 16, insulating plates 17 and 18 are disposed respectively for preventing a short circuit.

In the nonaqueous electrolyte secondary battery of the present invention, members used generally in lithium secondary batteries can be used as members other than the battery case 11. A more specific description follows.

The seal 12 includes a positive electrode lid 12a and an insulating gasket 12b that is disposed around the positive electrode lid 12a. The seal 12 is supported and fixed by a constriction 11c formed in the battery case 11.

The positive electrode 13 includes a current collector and an active material layer formed on the collector. The collector can be, for example, an aluminum foil. An active material contained in the active material layer can be a composite oxide of lithium and a transition metallic element. For example, lithium cobaltate (LiCoO₂) can be used. The positive electrode 13 is connected electrically with the positive electrode lid 12a via a positive electrode lead 19.

The negative electrode 14 includes a current collector and an active material layer formed on the collector. The collector can be, for example, a copper foil. An active material contained in the active material layer can be a carbon material that stores and releases lithium reversibly. The separator 15 can be, for example, a microporous film formed of a polyethylene resin. The negative electrode 14 is connected electrically with the battery case 11 via a negative electrode lead 20. The nonaqueous electrolyte will be discussed later.

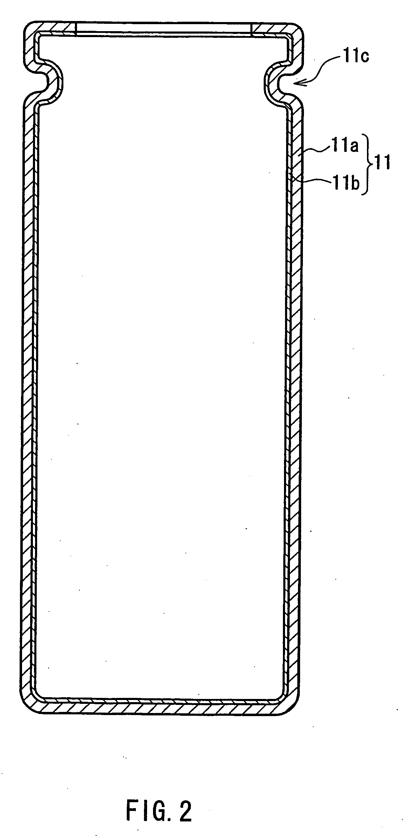

In the following, the battery case 11 will be described. Fig. 2 shows a cross-section of the battery case 11. The battery case 11 includes a case 11a formed of a metal plate containing iron as a principal component (the content is at least 95% by mass) and a metal layer 11b formed at least in a part of an inner surface of the case 11a. Fig. 2 illustrates the battery case 11 in which the metal layer 11b is formed on the entire inner surface of the case ha.

As the metal plate forming the case 11a, a plate made of iron or a general steel plate made of a metal obtained by adding an element such as carbon to iron can be used. The metal layer 11b contains a metallic element M, which may be two or more elements, dissolving in the nonaqueous electrolyte used in the nonaqueous electrolyte secondary battery 10 at a lower potential than iron and at a higher potential than lithium. The metallic element M can be zinc. The use of a zinc layer as the metal layer 11b can suppress the lowering of battery characteristics owing to the metal layer 11b. It also is expected that the metallic element M can be magnesium, titanium, vanadium or indium. It is preferable that the metallic element M is contained in the metal layer 11b in an amount that a quantity of electricity necessary for dissolving all of the metallic element M is at least 4% of a capacity of the nonaqueous electrolyte secondary battery 10.

The following is a description of an example of measuring a dissolution potential of zinc and iron. The nonaqueous electrolyte used here was prepared by dissolving LiPF₆ in a nonaqueous solvent in a concentration of 1.25 M. The solvent used here was prepared by mixing ethylene carbonate, ethylmethylcarbonate and dimethylcarbonate in a volume ratio of 2:3:3. When the dissolution potential of zinc in the nonaqueous electrolyte was measured, it was about 2.8 V higher than the dissolution potential of lithium. On the other hand, when the dissolution potential of iron was measured, it was about 3.0 V higher than that of lithium.

The metal layer 11b can be formed, for example, by plating. There is no particular limitation on the types of plating, and electroplating can be used, for example. In this case, a metal plate on which the metal layer 11b is formed by plating may be shaped so as to provide the case 11a. Alternatively, the metal layer 11b may be formed on the case 11a by plating. Otherwise, the battery case 11 may be formed by using a clad material obtained by attaching by pressure a plate to be the metal layer 11b and a metal plate to be the case 11a to each other.

Although Fig. 2 illustrates the case where the metal layer 11b is formed on the entire inner surface of the case 11a, the metal layer 11b also may be formed on a part of the case 11a. The metal layer 11b is formed at least in an area where the case 1l can be corroded particularly easily. Such an area in the case 11a is an area where the case 11a is bent (for example, a constricted portion or a bottom portion) and a portion near both ends of the electrode plate group 16. Thus, it is preferable that the metal layer 11b is formed at least in these portions.

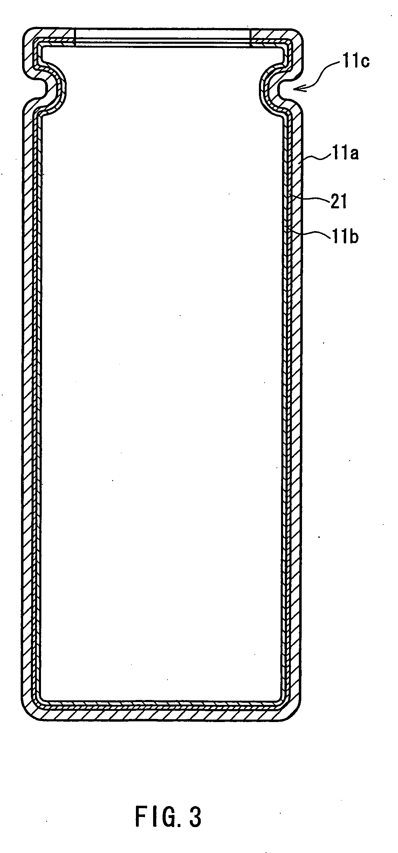

Furthermore, it may be possible to use a battery case in which a nickel layer 21 is formed on the inner surface of the case 11a and the metal layer 11b is formed on the nickel layer 21 as shown in Fig. 3. In this case, the case 11a including the nickel layer 21 can be formed by using a nickel-plated metal plate. Alternatively, the case 11a formed of a metal plate may be nickel-plated so as to form the nickel layer 21. In this case, the nickel layer 21 can be formed by electroplating or electroless plating. In the battery case of Fig. 3, the metal layer 11b (for example, a zinc layer) also can be formed by the above-described technique, for example, plating. Additionally, when the case 11a including the nickel layer 21 is used, it is preferable that the metal layer 11b is formed at least in an area of a constriction 11c of the case 11a because the nickel plating layer easily is damaged in the portion of the constriction 11c.

Hereinafter, an exemplary method for manufacturing the nonaqueous electrolyte secondary battery of the present invention will be described. First, a carbon material (an active material for negative electrode) obtained by burning an organic polymer compound (a phenolic resin, polyacrylonitrile, cellulose or the like) and a rubber-based binder (for example, SBR) are added to a solvent and kneaded, thereby producing a negative electrode paste. Then, this paste is applied to a current collector so as to form a negative electrode sheet, which is dried and then roll-pressed. In this manner, the negative electrode 14 whose surface is provided with an active material layer is obtained.

On the other hand, the positive electrode 13 is produced by a method similar to that for the negative electrode 14 except that LiCoO₂ is used as the active material and a fluorine-based binder (for example, PVDF) is used as the binder.

Next, the positive electrode 13 and the negative electrode 14 are wound while sandwiching the separator 15 therebetween, so that the spiral electrode plate group 16 is produced. Then, the positive electrode 13 and the positive electrode lid 12a are connected by the positive electrode lead 19, whereas the negative electrode 14 and the battery case 11 are connected by the negative electrode lead 20. At this time, the insulating plates 17 and 18 respectively are disposed at both ends of the electrode plate group 16. Subsequently, the nonaqueous electrolyte is poured into the battery case 11. Then, the battery case 11 is sealed by the seal 12. Next, this battery is subjected to an initial charging at a predetermined voltage. In this manner, the nonaqueous electrolyte secondary battery of the present invention is manufactured.

Other than the copper foil, a lath sheet-like metal foil or an etched metal foil can be used as the collector of the negative electrode 14. It is preferable that the collector of the negative electrode 14 has a thickness ranging from 10 to 50 µm.

Other than the carbon materials mentioned above, an artificial graphite, a natural graphite or a carbon material obtained by burning coke or pitch may be used as the active material for negative electrode. The active material for negative electrode preferably has a spherical shape, a scale-like shape or a massive form. The binder can be at least one selected from the group consisting of a fluorine-based binder, an acrylic rubber, a modified acrylic rubber, styrene-butadiene rubber (SBR), an acrylic polymer and a vinyl polymer. The fluorine-based binder can be, for example, polyvinylidene fluoride, a polytetrafluoroethylene resin or a copolymer of vinylidene fluoride and propylene hexafluoride. These binders are dispersed in water or an organic solvent for use.

The negative electrode paste may contain a conductivity auxiliary agent and a thickener as necessary. The conductivity auxiliary agent can be at least one selected from the group consisting of acetylene black, graphite and carbon fibers. The thickener can be at least one selected from the group consisting of ethylene-vinyl alcohol copolymer, carboxymethyl cellulose and methyl cellulose.

The solvent for forming the negative electrode paste can be a liquid in which the binder is dispersible. For example, in the case of using the binder that is dispersible in an organic solvent, it is possible to use as the solvent at least one organic solvent selected from the group consisting of N-methyl-2-pyrrolidone, N,N-dimethylformamide, tetrahydrofuran, dimethyl acetamide, dimethyl sulphoxide, hexamethylsulforamide, tetramethylurea, acetone and methyl ethyl ketone. On the other hand, in the case of using the binder that is dispersible in water, it is possible to use water as the solvent.

The negative electrode paste can be kneaded using, for example, a planetary mixer, a homomixer, a pin mixer, a kneader or a homogenizer. Also, the paste may be kneaded by using a plurality of the above. At the time of kneading, a dispersant, a surfactant and a stabilizer may be added to the paste.

The paste can be applied to the collector of the negative electrode using, for example, a slit die coater, a reverse roll coater, a lip coater, a blade coater, a knife coater, a gravure coater or a dip coater. After being applied, the paste preferably is dried in a state close to air-drying, but it can be heated to dry in order to enhance productivity. The condition of heating preferably is at 70°C to 300°C for 1 minute to 5 hours.

The negative electrode sheet is roll-pressed to a desired thickness using a roller press. The roll-pressing may be conducted several times under a constant linear load or different linear loads. In either case, it is preferable that the linear load is in the range of 9800 to 19600 N/cm (1000 to 2000 kgf/cm).

Other than the aluminum foil, a lath sheet-like metal foil or an etched metal foil can be used as the collector of the positive electrode 13. It is preferable that this collector has a thickness ranging from 10 to 60 µm.

Other than LiCoO₂, a transition metal compound in which a lithium ion is accepted as a guest species can be used as the active material for positive electrode. More specifically, a composite oxide containing lithium and at least one element selected from the group consisting of cobalt, manganese, nickel, chromium, iron and vanadium can be used as the active material. For example, LiCoO₂, LiMnO₂, LiNiO₂, LiCoₓNi₍₁₋ₓ₎O₂ (0 < x < 1), LiCrO₂, αLiFeO₂ and LiVO₂ can be used.

A conductive auxiliary agent, a thickener, a dispersant, a surfactant and a stabilizer also may be added to the positive electrode paste as necessary. They can be agents similar to those described for the negative electrode 14. Furthermore, the positive electrode paste can be applied to the collector, dried and roll-pressed by a method similar to the method for producing the negative electrode 14.

Other than the microporous film formed of a polyethylene resin, a microporous film formed of a polyolefin resin such as a polypropylene resin can be used as the separator 15. It is preferable that the separator 15 has a thickness ranging from 15 to 30 µm.

As the nonaqueous electrolyte, a nonaqueous electrolyte prepared by dissolving a lithium salt in a nonaqueous solvent can be used. The nonaqueous solvent can be, for example, ethylene carbonate, propylene carbonate, butylene carbonate, dimethylcarbonate, diethylcarbonate, γ-butyrolactone, 1,2-dimethoxyethane, 1,2-dichloroethane, 1,3-dimethoxypropane, 4-methyl-2-pentanone, 1,4-dioxane, acetonitrile, propionitrile, butyronitrile, valeronitrile, benzonitrile, sulfolane, 3-methyl-sulfolane, tetrahydrofuran, 2-methyltetrahydrofuran, dimethylformamide, dimethylsulfoxide, trimethyl phosphate or triethyl phosphate. These nonaqueous solvents may be used as a mixture of two or more solvents.

As the lithium salt, a lithium salt having a large electron attracting property is used. Such a lithium salt can be, for example, LiPF₆, LiBF₄, LiClO₄, LiAsF₆, LiCF₃SO₃, LiN(SO₂CF₃)₂, LiN(SO₂C₂F₅)₂ or LiC(SO₂CF₃)₃. Two or more of these electrolytes may be used in combination. These electrolytes may be dissolved in the nonaqueous solvent in an appropriate amount, for example a concentration of 0.5 to 1.5 mol/liter.

### Example

Hereinafter, the present invention will be described more in detail by way of an example. In the following example, 50 batteries for each of 8 types with different battery cases were produced. Each battery had an ICR17500 size (17 mm in diameter and 50 mm in height) according to JIS C8711 and a capacity of 800 mAh. The obtained batteries were tested for electrolyte leakage at the time of over-discharging.

The test was carried out as follows. After being subjected to finish charging/ discharging, the assembled battery was aged at 45°C for 2 weeks and further allowed to stand at a room temperature 20°C for 1 week. Subsequently, the battery was charged at a constant current of 800 mA (1 CmA) until the voltage of the battery reached 4.2 V, and then discharged at a constant current of 800 mA (1 CmA) until the voltage of the battery reached 3.0 V. Next, the battery was allowed to stand at 60 °C for 30 days while being connected with a constant resistivity load of 1 kΩ so that the battery was over-discharged. Thereafter, the number of leaking batteries was counted. The following is a description of the method for producing each battery.

### (Battery A)

A mixture of 100 parts by mass of scale-like graphite serving as the active material for a negative electrode, a water dispersion of 4 parts by mass of styrene-butadiene rubber (binder) and an aqueous solution of 0.8 parts by mass of carboxymethyl cellulose (thickener) was kneaded with a planetary mixer, thus obtaining a paste. Then, this paste was applied onto a belt-like copper foil (14 µm in thickness) with a slit die coater, followed by drying, thus producing a sheet (300 µm in thickness) whose surface was provided with an active material layer. Next, this sheet was roll-pressed three times at a linear load of 1080 N/cm (110 kgf/cm) using a roller press, thus obtaining a 196-µm-thick negative electrode plate.

A mixture of 100 parts by mass of lithium cobaltate serving as the active material for positive electrode, 3 parts by mass of carbon powder of acetylene black (conductive agent), a water dispersion of 4 parts by mass of a polytetrafluoroethylene resin (binder) and an aqueous solution of 0.8 parts by mass of carboxymethyl cellulose (thickener) was kneaded with a planetary mixer, thus obtaining a paste. Then, this paste was applied onto a belt-like aluminum foil (20 µm in thickness) with a slit die coater, followed by drying, thus producing a sheet (290 µm in thickness) whose surface was provided with an active material layer.

Next, this sheet was roll-pressed three times at a linear load of 9800 N/cm (1000 kgf/cm) using a roller press, thus obtaining a 180-µm-thick positive electrode plate. Subsequently, the positive electrode lead 19 was spot-welded to a portion to which the collector of the positive electrode plate (the aluminum foil) was exposed, and dried at 250°C for 10 hours. Then, by sandwiching a polypropylene separator (20 µm in thickness) with the positive electrode 13 and the negative electrode 14 and winding them spirally, an electrode plate group was formed. This electrode plate group was enclosed in the battery case in which an insulating plate was disposed at its bottom. In a battery A, a case made of an iron plate whose inner surface is provided with a zinc plating layer was used as the battery case. This battery case was produced by forming an iron plate whose one surface was plated with zinc into the shape of the case.

Subsequently, the positive electrode lead was connected with the positive electrode lid, whereas the negative electrode lead was connected with the bottom of the battery case. Then, the insulating plate was disposed above the electrode plate group. Next, a predetermined amount of the electrolyte was poured into the battery case. The electrolyte was prepared by dissolving lithium hexafluorophosphate (LiPF₆) serving as an electrolyte in a solvent, which is a mixture of ethylene carbonate and ethylmethylcarbonate, in a concentration of 1.25 mol/liter. Then, the battery case was sealed using the positive electrode lid and a gasket made of a polypropylene resin. After that, this battery was subjected to an initial charging at a predetermined voltage, thus producing the battery A having an ICR17500 size according to JIS C8711 and a capacity of 800 mAh. 50 batteries A were over-discharged under the above-mentioned condition so as to check the occurrence of electrolyte leakage by observation.

In the battery A, the amount of zinc in the zinc plating layer formed on the inner surface of the battery case was about 39 mg. The quantity of electricity necessary for dissolving all of the zinc of this zinc layer electrochemically as a zinc ion was about 32 mAh, which corresponded to about 4% of the capacity of the battery. None of the 50 batteries A showed leakage from the over-discharging, and excellent results were achieved.

### (Battery B)

A battery B was produced similarly to the battery A except for the battery case. As the battery case of the battery B, a battery case formed by using a nickel-plated iron plate was used. In 9 out of the 50 batteries B, leakage was caused by the over-discharging.

### (Battery C)

A battery C was produced similarly to the battery A except that the amount of zinc in the zinc layer formed on the inner surface of the battery case was about 20 mg. The quantity of electricity necessary for dissolving all of the zinc of this zinc layer electrochemically as a zinc ion was about 16 mAh, which corresponded to about 2% of the capacity of the battery. In 3 out of the 50 batteries C, leakage was caused by the over-discharging.

### (Battery D)

A battery D was produced similarly to the battery A except for the battery case. As the battery case of the battery D, a case obtained by forming a zinc layer by plating on the inner surface of a case formed of a nickel-plated iron plate was used. The amount of zinc in this zinc layer was about 39 mg. The quantity of electricity necessary for dissolving all of the zinc of this zinc layer electrochemically as a zinc ion was about 32 mAh, which corresponded to about 4% of the capacity of the battery. In all of the 50 batteries D, leakage was not caused by the over-discharging, and excellent results were achieved.

### (Battery E)

A battery E was produced similarly to the battery A except for the battery case. As the battery case of the battery E, a case obtained by forming a zinc layer by plating in a constricted portion and its vicinity in the upper part of the inner surface of the case formed of a nickel-plated iron plate was used. The amount of zinc in this zinc layer was about 42 mg. The quantity of electricity necessary for dissolving all of the zinc of this zinc layer electrochemically as a zinc ion was about 34 mAh, which corresponded to about 4% of the capacity of the battery. None of the 50 batteries E showed leakage by the over-discharging, and excellent results were achieved.

### (Battery F)

A battery F was produced similarly to the battery A except for the battery case. As the battery case of the battery F, a case obtained by forming a zinc layer by plating in a bottom part and its vicinity of the inner surface of the case formed of a nickel-plated iron plate was used. The amount of zinc in this zinc layer was about 40 mg. The quantity of electricity necessary for dissolving all of the zinc of this zinc layer electrochemically as a zinc ion was about 33 mAh, which corresponded to about 4% of the capacity of the battery. None of the 50 batteries F showed leakage by the over-discharging, and excellent results were achieved.

### (Battery G)

A battery G was produced similarly to the battery A except for the battery case. As the battery case of the battery G, a case obtained by forming a zinc layer by plating in a constricted portion and its vicinity in the upper part and in a bottom part and its vicinity of the inner surface of the case formed of a nickel-plated iron plate was used. The total amount of zinc in these two zinc layers was about 40 mg. The quantity of electricity necessary for dissolving all of the zinc of these zinc layers electrochemically as a zinc ion was about 33 mAh, which corresponded to about 4% of the capacity of the battery. None of the 50 batteries G showed leakage by the over-discharging, and excellent results were achieved.

### (Battery H)

A battery H was produced similarly to the battery A except for the battery case. As the battery case of the battery H, a case obtained by shaping a clad material including an iron plate to which a zinc plate is attached by pressure was used. The clad material was shaped so that the zinc plate faces inside the case, thus producing the battery case. The amount of zinc in the zinc layer (the zinc plate) facing inside the battery case was about 50 mg. The quantity of electricity necessary for dissolving all of the zinc of this zinc layer electrochemically as a zinc ion was about 41 mAh, which corresponded to about 5% of the capacity of the battery. None of the 50 batteries H showed leakage by the over-discharging, and excellent results were achieved.

As becomes clear from the above results, the occurrence rate of leakage was lower in the batteries A and C to H, in which the zinc layer was formed on the inner surface of their battery case, than in the battery B. By setting the amount of zinc in the zinc layer on the inner surface of the battery case such that the quantity of electricity necessary for dissolving this zinc as a zinc ion was at least 4% of the capacity of the battery, it was possible to reduce the occurrence rate of leakage particularly.

Incidentally, although Fig. 1 illustrated a cylindrical battery, the present invention is not limited to the cylindrical battery but can be applied to batteries having other shapes such as a rectangular shape.

A nonaqueous electrolyte secondary battery including a battery case that is not corroded easily even at the time of over-discharging is provided. The nonaqueous electrolyte secondary battery includes a battery case 11 serving as a negative electrode terminal, and a positive electrode 13, a negative electrode 14, a separator 15 and a nonaqueous electrolyte that are enclosed in the battery case 11. The positive electrode 13 and the negative electrode 14 respectively include an active material that stores and releases lithium reversibly. The battery case 11 includes a case 11a formed of a metal plate having iron as a principal component and a metal layer 11b formed at least in a part of an inner surface of the case 11a, and the metal layer 11b includes a metallic element M that dissolves in the nonaqueous electrolyte at a lower potential than iron and at a higher potential than lithium.

## Claims

1. A nonaqueous electrolyte secondary battery comprising:
a battery case serving as a negative electrode terminal;
a positive electrode enclosed in the battery case;
a negative electrode enclosed in the battery case;
a separator enclosed in the battery case; and
a nonaqueous electrolyte enclosed in the battery case;
wherein the positive electrode and the negative electrode respectively comprise an active material that stores and releases lithium reversibly,
the battery case comprises a case formed of a metal plate having iron as a principal component and a metal layer formed at least in a part of an inner surface of the case, and
the metal layer comprises a metallic element M that dissolves in the nonaqueous electrolyte at a lower potential than iron and at a higher potential than lithium.

2. The nonaqueous electrolyte secondary battery according to claim 1, wherein the metal layer is a layer formed by plating.

3. The nonaqueous electrolyte secondary battery according to claim 1, wherein the battery case comprises a nickel layer formed on the inner surface of the case, and the metal layer is formed on the nickel layer.

4. The nonaqueous electrolyte secondary battery according to claim 1, wherein the battery case is formed of a clad material obtained by attaching by pressure a plate to be the metal layer and the metal plate to each other.

5. The nonaqueous electrolyte secondary battery according to claim 1, wherein the metal layer is formed at least in a corner of a bottom part of the inner surface of the case.

6. The nonaqueous electrolyte secondary battery according to claim 1, further comprising a sealing plate for sealing the battery case,
wherein the battery case is provided with a constriction for fixing the sealing plate, and the metal layer is formed in a portion of the constriction.

7. The nonaqueous electrolyte secondary battery according to claim 1, wherein the positive electrode, the negative electrode and the separator are wound spirally so as to form an electrode plate group, and the metal layer is formed near an end of the electrode plate group.

8. The nonaqueous electrolyte secondary battery according to any of claims 1 to 7, wherein a quantity of electricity necessary for dissolving as a metal ion all of the metallic element M contained in the metal layer is at least 4% of a capacity of the battery.

9. The nonaqueous electrolyte secondary battery according to any of claims 1 to 8, wherein the metallic element M is zinc.
